# FASCICULE DE BREVET EUROPEEN

(11) **EP 3 775 645 B1**
(45) Date de publication et mention de la délivrance du brevet: **04.10.2023**
(21) Numéro de dépôt: 19719345.1
(22) Date de dépôt: 22.03.2019
(51) Int. Cl.: F16K 31/524, F16K 5/06, F16K 11/16

(54) **VANNE DE REGULATION AMELIOREE AVEC FONCTION DE PURGE INTEGREE**
VERBESSERTES REGELVENTIL MIT INTEGRIERTER SPÜLFUNKTION
IMPROVED REGULATING VALVE WITH INTEGRATED PURGE FUNCTION

(30) Priorité: 30.03.2018 FR 1852824
(43) Date de publication de la demande: 17.02.2021
(73) Titulaire: ArianeGroup SAS, 78130 Les Mureaux (FR)
(72) Inventeur: LAVENU, Yoann, 78520 Follainville (FR); CAZIN, Benoît, 75017 Paris (FR); CARON, Anthony, 76000 Rouen (FR); FAYE, Olivier, 27120 Menilles (FR)
(74) Mandataire: Cabinet Beau de Loménie
(86) Numéro de dépôt international: PCT/FR2019/050666
(87) Numéro de publication internationale: WO 2019/186039

(56) Documents cités:
- WO-A1-2004/106785
- DE-C- 569 892
- GB-A- 234 150
- GB-A- 342 040
- GB-A- 649 778
- US-A- 588 015
- US-A- 1 655 889
- US-A- 3 770 016
- US-A1- 2008 105 845
- US-A1- 2013 048 892
- US-A1- 2015 129 788

## Description

### DOMAINE DE L'INVENTION

Le présent exposé concerne les vannes de contrôle utilisées notamment pour la régulation de débit d'un fluide cryogénique d'un engin spatial.

### ETAT DE LA TECHNIQUE ANTERIEURE

Les systèmes de régulation de débit d'ergols cryogéniques employés dans les engins spatiaux doivent permettre la réalisation de fonctions de régulation de débit et de purge.

Ces fonctions sont communément réalisées par des dispositifs distincts. Une vanne à boisseau réalise la fonction de régulation de débit, tandis qu'une vanne de purge réalise la fonction de purge. Une telle configuration nécessite cependant l'utilisation de multiples équipements distincts, ce qui entraîne une complexification de la structure (qui comprend alors notamment deux systèmes d'actionnement et deux architectures de vanne et corps associés), ainsi qu'une augmentation de la masse, de l'encombrement et des coûts associés.

Le présent exposé vise ainsi à répondre au moins partiellement à ces problématiques.
US 3 770 016 A divulgue un robinet à boule muni d'un conduit de purge et adapté pour l'eau. US 2015/0129788 A1 divulgue un robinet à boule adapté pour des fluides froids ou cryogéniques. GB 649778 A divulgue une unité de vanne de régulation.

### PRESENTATION DE L'INVENTION

Le présent exposé concerne une vanne de contrôle d'un débit de fluide cryogénique dans une conduite tel que définie à la revendication 1.

Selon un exemple, le boisseau est configuré de manière à ce que l'écoulement entre le conduit amont et le conduit aval via le corps de vanne régulé par la rotation du boisseau selon le premier secteur angulaire présente des pertes de charges en fonction de la rotation du boisseau.

Selon un exemple, le boisseau présente une ouverture dont la section augmente depuis une première extrémité vers une seconde extrémité, ladite ouverture étant aménagée autour de l'axe de rotation du boisseau.

Le présent exposé concerne également un engin spatial comprenant une telle vanne.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente une vue d'une vanne selon un aspect de l'invention,
- les figures 2 et 3 sont des vues en coupe de la vanne représentée sur la figure 1,
- la figure 4 illustre le boisseau de la vanne pris isolément,
- les figures 5, 6 et 7 représentent différents états de la vanne lors de son fonctionnement,
- la figure 8 est un diagramme schématisant les différents secteurs angulaires en relation avec les figures 5 à 7.

Sur l'ensemble des figures, les éléments identiques sont repérés par des références numériques communes.

### DESCRIPTION DETAILLEE D'EXEMPLES DE REALISATION

On décrit ci-après une vanne selon un aspect de l'invention en référence aux figures.

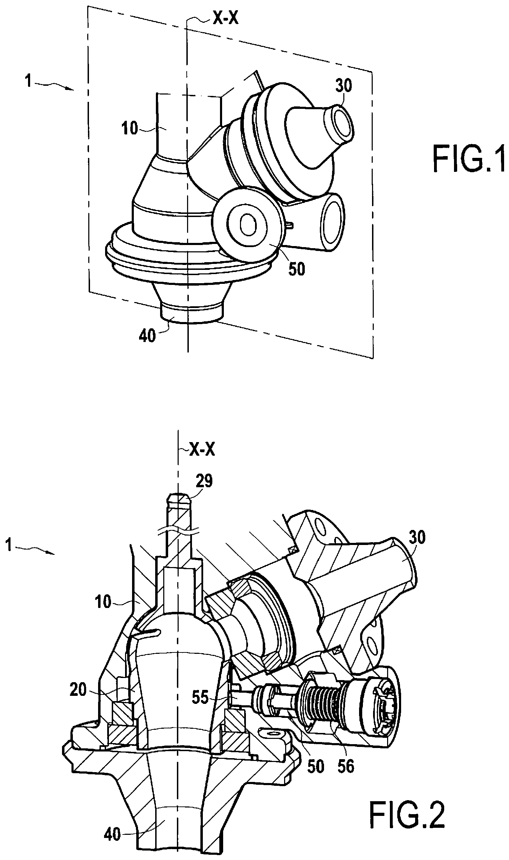

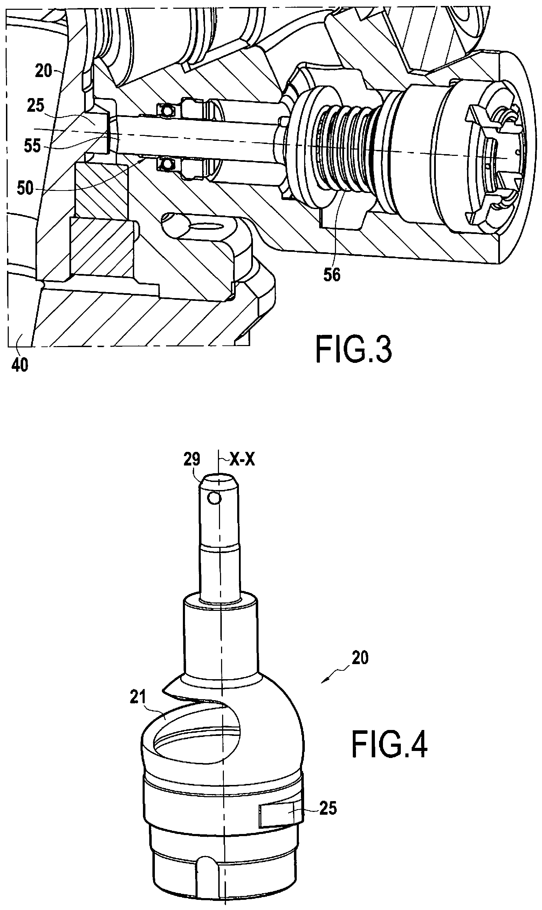

La figure 1 représente une vue d'une vanne selon un aspect de l'invention, la figure 2 en représente une vue en coupe, et la figure 3 est une vue détaillée en coupe d'une région spécifique de la vanne.

La vanne 1 comprend un corps de vanne 10 dans lequel est monté un boisseau 20, et auquel sont reliés un conduit amont 30, un conduit aval 40, un conduit de purge 50, et un obturateur 55.

Les dénominations de conduit amont et conduit aval sont utilisées en fonction du fonctionnement envisagé pour la vanne 1. Le conduit amont 30 est destiné à être relié à une source d'alimentation de fluide (par exemple un ergol cryogénique) tel qu'un réservoir ou une turbopompe, et le conduit aval 40 est destiné à être relié à un organe de propulsion d'un engin spatial, tel qu'un générateur de gaz.

Le conduit amont 30 et le conduit aval 40 sont ainsi reliés fluidiquement à un volume interne du corps de vanne 10.

Le boisseau 20 est monté dans le volume interne du corps de vanne 10, et remplit une fonction d'obturation sélective de la communication fluidique entre le conduit amont 30 et le conduit aval 40.

Le boisseau 20 présente ainsi typiquement une forme généralement cylindrique de révolution autour d'un axe de rotation X-X. Il présente une ouverture 21 traversante aménagée sur sa paroi, l'ouverture 21 étant adaptée pour pouvoir être alignée avec la portion du conduit amont 30 débouchant dans le volume interne du corps de vanne 10. Cette ouverture 21 aménagée dans le boisseau 20 présente une section variable en fonction du secteur angulaire autour de l'axe X-X, typiquement une section d'ouverture croissante depuis une première extrémité jusqu'à une seconde extrémité, de sorte qu'une rotation du boisseau 20 au sein du corps de vanne 10 autour de l'axe X-X permet de piloter le débit de fluide pouvant passer du conduit amont 30 au volume interne du corps de vanne 10, et donc plus généralement du conduit amont 30 au conduit aval 40.

Ainsi, la rotation du boisseau 20 autour de l'axe X-X via un système d'actionnement (non représenté) permet de piloter les pertes de charge générées par le boisseau 20, et donc le débit de fluide passant du conduit amont 30 au conduit aval 40. On note cependant que l'ouverture 21 s'étend sur un secteur angulaire inférieur à 360°, le secteur angulaire restant permettant ainsi de réaliser une obturation de la liaison entre le volume interne du corps de vanne 10 et le conduit amont 30. Le boisseau 20 peut être relié au système d'actionnement (non représenté) via l'extrémité 29 du boisseau 20 qui est opposée au conduit aval 40.

La vanne 1 telle que proposée exploite ce secteur angulaire en y positionnant un ergot 25 s'étendant depuis la surface externe du boisseau 20, typiquement positionné de manière à être en regard du conduit de purge 50 et ainsi permettre d'actionner un obturateur 55 du conduit de purge 50 comme on le décrit ci-après.

Le conduit de purge 50 est formé de manière à permettre à relier le conduit amont 30 à une ligne de purge (non représentée). Le conduit de purge est ainsi relié fluidiquement au conduit amont 30, la liaison étant réalisée en amont de la jonction entre le conduit amont 30 et le volume interne du corps de vanne 10, et donc en amont du boisseau 20. Un obturateur 55 est monté coulissant dans le conduit de purge 50, de manière à sélectivement l'obturer. Cet obturateur 55 est associé à un élément de retour 56, typiquement un ressort, assurant un maintien par défaut de l'obturateur 55 en position d'obturation.

L'obturateur 55 présente une tige dont l'extrémité débouche dans le volume interne du corps de vanne 10. Cette tige est positionnée de manière à pouvoir être actionnée par l'ergot 25 formé sur le boisseau 20 lorsque la rotation du boisseau 20 est réalisée selon un secteur angulaire défini. L'ergot 25 vient alors exercer un effort de poussée sur l'obturateur 55 pour le faire coulisser dans le conduit de purge 50 en s'opposant à l'effort exercé par l'élément de retour 56, et ainsi permettre un passage de fluide depuis le conduit amont 30 vers le conduit de purge 50.

Lorsque le boisseau 20 tourne de manière à ce que l'ergot 25 ne soit plus au contact de l'obturateur 55, ce dernier est ramené en position d'obturation du fait de l'élément de retour 56.

L'ergot 25 présente typiquement une section centrale à partir de laquelle s'étend une rampe fonctionnelle de l'ergot 25, de manière à ce que la rotation continue dans un même sens du boisseau 20 autour de l'axe X-X amène l'obturateur 55 au contact de cette rampe fonctionnelle, puis de sa section centrale (correspondant au débattement maximal). Une telle géométrie permet de réguler le déplacement de l'obturateur 55 et donc l'ouverture du conduit de purge 50.

Ainsi, la vanne 1 telle que proposée permet de, en fonction de la position angulaire du boisseau 20, réguler le débit passant du conduit amont 30 vers le conduit aval 40, obturer le passage du fluide du conduit amont 30 vers le conduit aval 40, ou encore réaliser une purge du conduit amont 30 via le conduit de purge 50.

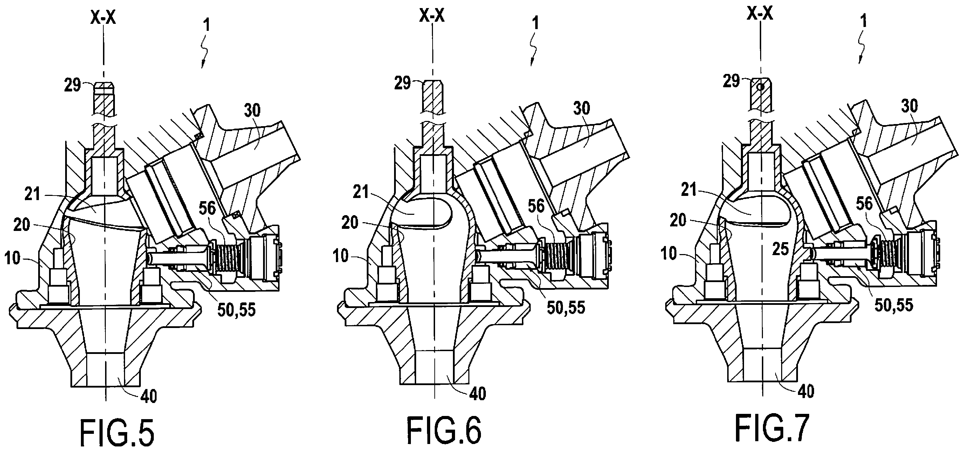

On représente ainsi ces différentes configurations sur les figures 5 à 7. Sur les figures 3 et 5 à 7, afin de ne pas surcharger le dessin, les différents joints assurant l'étanchéité de la vanne 1, notamment lorsqu'elle obture le passage du fluide du conduit amont 30 vers le conduit aval 40, ne sont pas représentés.

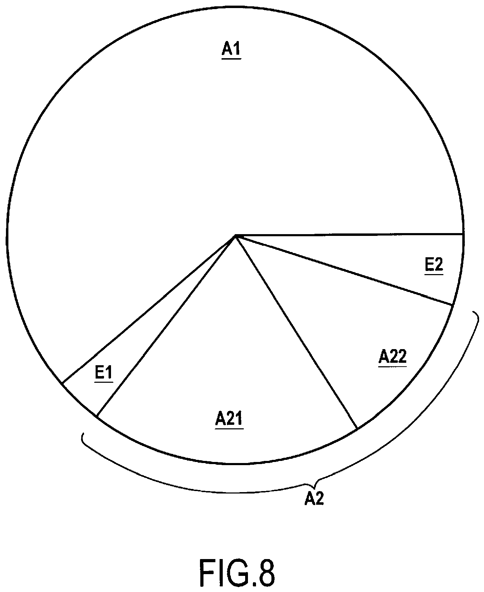

Afin d'en illustrer le fonctionnement, on représente sur la figure 8 un diagramme avec différents secteurs angulaires pour schématiser la rotation du boisseau 20 et les différentes configurations de la vanne 1.

On considère un premier secteur angulaire A1 qui correspond à une zone de régulation du débit passant du conduit amont 30 vers le conduit aval 40 via le boisseau 20, et plus précisément grâce à l'ouverture 21 évolutive réalisée dans le boisseau 20, ce qui correspond à la configuration représentée sur la figure 5.

Un second secteur angulaire A2 disjoint du premier secteur angulaire A1 correspond à la configuration dans laquelle le boisseau 20 obture le conduit amont 30. Le second secteur angulaire A2 et le premier secteur angulaire A1 sont représentés comme étant séparés par des zones d'étanchéité E1 et E2.

La zone d'étanchéité E1 définit une marge entre la position de fermeture de la vanne 1 et son ouverture via l'ouverture 21 du boisseau.

La zone d'étanchéité E2 est quant à elle une zone non fonctionnelle, pouvant former une butée entre la position correspondant à la vanne 1 présentant une ouverture maximale ou minimale, et la position correspondant à la vanne 1 fermée et au conduit de purge 50 ouvert.

L'amplitude cumulée des secteurs angulaires A2, E1 et E2 contribue à la bonne tenue mécanique du boisseau 20, et doit donc être suffisante pour assurer une bonne rigidité du boisseau 20.

Au sein du second secteur angulaire A2, on distingue un premier sous-secteur A21 et un second sous-secteur A22. Le premier sous-secteur A21 correspond à la configuration dans laquelle le boisseau 20 obture le conduit amont 30, et l'ergot 25 n'est pas au contact de l'obturateur 55 (le conduit de purge 50 est alors obturé), ce qui correspond à la configuration représentée sur la figure 6. Le second sous-secteur A22 correspond à la configuration dans laquelle le boisseau 20 obture le conduit amont 30, et l'ergot 25 est au contact de l'obturateur 55 afin de commander l'ouverture du conduit de purge 50, ce qui correspond à la configuration représentée sur la figure 7, c'est-à-dire une action de purge tout en maintenant le passage depuis le conduit amont 30 vers le conduit aval 40 obturé.

En synthèse donc, la vanne 1 telle que proposée permet de cumuler des fonctions de régulation de débit et de purge au sein d'un unique équipement, en exploitant une plage angulaire de rotation du boisseau 20 qui demeure inexploitée dans les systèmes existants.

On notera en outre que l'actionnement en rotation du boisseau 20 tel que décrit ci-dessus, et donc le contrôle de la vanne 1, peut être effectué par un unique système d'actionnement.

La vanne 1 telle que proposée, ou plus précisément le corps de vanne 10 est typiquement réalisé par fabrication additive.

## Revendications

1. Vanne (1) de contrôle d'un débit de fluide cryogénique dans une conduite, comprenant :
- un corps de vanne (10) muni d'un boisseau (20), le boisseau (20) comportant une extrémité (29) destinée à être reliée à un système d'actionnement,
- un conduit amont (30),
- un conduit aval (40),
- un conduit de purge (50) muni d'un obturateur (55),
le conduit amont (30) et le conduit aval (40) débouchant dans le corps de vanne (10),
le conduit de purge (50) étant relié au conduit amont (30), et l'obturateur (55) étant configuré de manière à être par défaut dans une position d'obturation du conduit de purge (50),
le boisseau (20) étant mobile en rotation selon un axe (X-X) longitudinal dans le corps de vanne (10), de sorte que :
- la rotation du boisseau (20) selon un premier secteur angulaire (A1) définit un écoulement entre le conduit amont (30) et le conduit aval (40) via le corps de vanne (10),
- la rotation du boisseau (20) selon un second secteur angulaire (A2) disjoint du premier secteur angulaire (A1) obture la liaison entre le conduit amont (30) et le conduit aval (40),
- la rotation du boisseau (20) selon un troisième secteur angulaire (A22) inclus dans le second secteur angulaire (A2) actionne l'obturateur (55) de manière à permettre un écoulement depuis le conduit amont (30) vers le conduit de purge (50),
- le conduit aval (40) étant opposé à ladite extrémité (29) du boisseau (20) sur ledit axe (X-X), et
le boisseau (20) présentant un ergot (25) aménagé sur une surface externe du boisseau (20), l'ergot (25) étant configuré pour, lorsque le boisseau (20) est entraîné en rotation dans le troisième secteur angulaire (A22), venir au contact et actionner l'obturateur (55) de manière à permettre un écoulement depuis le conduit amont (30) vers le conduit de purge (50).

2. Vanne (1) de contrôle selon la revendication 1, dans laquelle le boisseau (20) est configuré de manière à ce que l'écoulement entre le conduit amont (30) et le conduit aval (40) via le corps de vanne (10) régulé par la rotation du boisseau (20) selon le premier secteur angulaire (A1) présente des pertes de charges en fonction de la rotation du boisseau (20).

3. Vanne (1) de contrôle selon la revendication 1 ou 2, dans laquelle le boisseau (20) présente une ouverture (21) dont la section augmente depuis une première extrémité vers une seconde extrémité, ladite ouverture (21) étant aménagée autour de l'axe (X-X) de rotation du boisseau (21).

4. Engin spatial comprenant une vanne (1) selon l'une des revendications 1 à 3.

## Patentansprüche

1. Ventil (1) zur Steuerung des Durchsatzes eines kryogenen Fluids in einer Leitung, umfassend:
- einen Ventilkörper (10), der mit einem Durchgang (20) versehen ist, wobei der Durchgang (20) ein Ende (29) beinhaltet, das dazu bestimmt ist, mit einem Betätigungssystem verbunden zu werden,
- einen stromaufwärtigen Kanal (30),
- einen stromabwärtigen Kanal (40),
- einen Entleerungskanal (50), der mit einem Stopfen (55) versehen ist,
wobei der stromaufwärtige Kanal (30) und der stromabwärtige Kanal (40) in den Ventilkörper (10) münden,
der Entleerungskanal (50) mit dem stromaufwärtigen Kanal (30) verbunden ist, und der Stopfen (55) auf solche Weise ausgestaltet ist, dass er sich normalerweise in einer Position zum Verschließen des Entleerungskanals (50) befindet,
der Durchgang (20) entlang einer Längsachse (X-X) in dem Ventilkörper (10) drehbar beweglich ist, auf solche Weise, dass:
- die Drehung des Durchgangs (20) entlang eines ersten Winkelsektors (A1) eine Strömung zwischen dem stromaufwärtigen Kanal (30) und dem stromabwärtigen Kanal (40) über den Ventilkörper (10) definiert,
- die Drehung des Durchgangs (20) entlang eines zweiten Winkelsektors (A2), der nicht an den ersten Winkelsektor (A1) angrenzt, die Verbindung zwischen dem stromaufwärtigen Kanal (30) und dem stromabwärtigen Kanal (40) verschließt,
- die Drehung des Durchgangs (20) entlang eines dritten Winkelsektors (A22), der in dem zweiten Winkelsektor (A2) enthalten ist, den Stopfen (55) auf eine Weise betätigt, dass eine Strömung von dem stromaufwärtigen Kanal (30) zu dem Entleerungskanal (50) erlaubt wird,
- wobei der stromabwärtige Kanal (40) dem Ende (29) des Durchgangs (20) auf der Achse (X-X) entgegengesetzt ist, und
der Durchgang (20) einen Ansatz (25) aufweist, der in einer äußeren Oberfläche des Durchgangs (20) vorgesehen ist, wobei der Ansatz (25) dazu ausgestaltet ist, um, wenn der Durchgang (20) drehend in den dritten Winkelsektor (A22) angetrieben wird, mit dem Stopfen (55) in Kontakt zu gelangen und ihn auf eine Weise zu betätigen, dass eine Strömung von dem stromaufwärtigen Kanal (30) zu dem Entleerungskanal (50) erlaubt wird.

2. Steuerventil (1) nach Anspruch 1, wobei der Durchgang (20) auf solche Weise ausgestaltet ist, dass die Strömung zwischen dem stromaufwärtigen Kanal (30) und dem stromabwärtigen Kanal (40) über den Ventilkörper (10), die durch die Drehung des Durchgangs (20) entlang des ersten Winkelsektors (A1) geregelt wird, Druckverluste als Funktion der Drehung des Durchgangs (20) aufweist.

3. Steuerventil (1) nach Anspruch 1 oder 2, wobei der Durchgang (20) eine Öffnung (21) aufweist, deren Querschnitt von einem ersten Ende zu einem zweiten Ende hin zunimmt, wobei die Öffnung (21) um die Drehachse (X-X) des Durchgangs (20) herum vorgesehen ist.

4. Raumfahrzeug, umfassend ein Ventil (1) nach einem der Ansprüche 1 bis 3.

## Claims

1. A valve (1) for controlling the flow rate of a cryogenic fluid in a duct, comprising:
- a valve body (10) provided with a plug (20), the plug (20) having an end (29) to be connected to an actuation system,
- an upstream duct (30),
- a downstream duct (40),
- a purge duct (50) provided with a shutter (55),
the upstream duct (30) and the downstream duct (40) opening into the valve body (10),
the purge duct (50) being connected to the upstream duct (30), and the shutter (55) being configured so as to be, by default, in a shut-off position of the purge duct (50),
the plug (20) being movable in rotation about a longitudinal axis (X-X) in the valve body (10), so that:
- the rotation of the plug (20) according to a first angular sector (A1) defines a flow between the upstream duct (30) and the downstream duct (40) via the valve body (10),
- the rotation of the plug (20) according to a second angular sector (A2) separate from the first angular sector (A1) shuts off the connection between the upstream duct (30) and the downstream duct (40),
- the rotation of the plug (20) according to a third angular sector (A22) included in the second angular sector (A2) actuates the shutter (55) so as to allow a flow from the upstream duct (30) to the purge duct (50),
- the downstream duct (40) being opposite said end (29) of the plug (20) on said axis (X-X) and
the plug (20) having a lug (25) arranged on an outer surface of the plug (20), the lug (25) being configured, when the plug (20) is driven in rotation in the third angular sector (A22), to come into contact and actuate the shutter (55) so as to allow a flow from the upstream duct (30) to the purge duct (50).

2. The control valve (1) according to claim 1, wherein the plug (20) is configured such that the flow between the upstream duct (30) and the downstream duct (40) via the valve body (10) regulated by the rotation of the plug (20) according to the first angular sector (A1) has pressure drops as a function of the rotation of the plug (20).

3. The control valve (1) according to claim 1 or 2, wherein the plug (20) has an opening (21) whose section increases from a first end to a second end, said opening (21) being arranged about the axis (X-X) of rotation of the plug (20).

4. A spacecraft comprising a valve (1) according to any of claims 1 to 3.
